# EUROPEAN PATENT APPLICATION

(11) **EP 0 930 036 A1**
(43) Date of publication of application: **21.07.1999**
(21) Application number: 99850001.1
(22) Date of filing: 04.01.1999
(51) Int. Cl.: A47J 27/212

(54) **Waterkettle**

(30) Priority: 14.01.1998 SE 9800058
(71) Applicant: AKTIEBOLAGET ELECTROLUX, 105 45 Stockholm (SE)
(72) Inventor: Kristensson, Rickard, 18433 Akersberga (SE); Mansson, Christer, 16963 Solna (SE)
(74) Representative: Erixon, Bo

(57) **Abstract**

A waterkettle system (100) with alert signal, which have as purpose to give a user of the waterkettle system the information if water has been heated, or if manual or pre-set temperature is reached. This happens in the waterkettle system with a signal. The waterkettle system comprising a waterkettle (102), a container (104), an electrical signal unit (106), an automatic power switch device (108), a base unit (112) and a manual power switch device (110). Signal-/sound unit (106) comprising an electric circuit with an alarm, which is in very base unit (112). A current supplier system is the parts in the waterkettle system with can be connected with an external mains. The power system comprising the parts that current can go through. The signal unit senses if current voltage is of or in the water boiling system and gives thereby an acoustic or visual signal.

## Description

### TECHNICAL FIELD OF THE INVENTION

Present invention relates to a device for waterkettles, especially for a waterkettle system with alert signal.

### DESCRIPTION OF RELATED ART

Today there are many kinds of waterkettles, among others waterkettles for use in household, for example to heat water for tea.

There are several models of waterkettles have a whistle mounted on the pipe, which begin to sound by the steam pressure when the water begins to boil. The purpose with the whistle is to notify the user that water is ready for use.

In the British application GB 2 206 277, "Electric kettle", by Maurits E Demeyere, is a waterkettle described with a whistle that sounds when required temperature is reached, 99°C to 100°C. The whistle is mounted on a lid of the waterkettle.

Modern waterkettles have however today an automatic turn off device when water is heated, why the steam pressure will not be built in time. The whistle will only be able to sound for a short moment or not at all, before the waterkettle is turned off. The turn off occurs for example by means of a bimetal spring, which is activated by heat, when the heat is transported by the steam pressure in the waterkettle.

### SUMMARY OF THE INVENTION

One purpose with present invention is to achieve a waterkettle that gives a signal when the water is heated, even if the waterkettle is provided with an automatic turn off device.

Another purpose with the present invention is to achieve a waterkettle that gives a sound and/or a light signal when the water reaches the pre-set temperature even if the waterkettle system is provided with an automatic turn off device.

A further purpose with the present invention is to achieve a watarkettle gives a sound- and/or light signal when there is no water in the container.

A further purpose that the present invention solves is to get a waterkettle that gives a sound- and/or light signal when the water level is too low.

The present invention relates preferably to a waterkettle, a feeding bottle heater etc, with signal that warns when the content is hot.
The present invention the waterkettle solves the problem in a simple way: When the current to the waterkettle disconnects, it will give a signal. A signal unit is connected to the power source in the waterkettle. The signal unit sounds when the power is disconnected, i.e. when required temperature have been achieved, or if the heated matter has been disconnected prematurely.

One advantage with the present invention is consequently that it in a simple way solves the problem with the signal when the water reaches boiling level or the pre-set temperature level.

Another advantage with above invention is that it warns if the heated matter has been turned off prematurely, either manually or if any of the security systems have been released and made so that the waterkettle has been turned off.

The invention will now be described with the help of preferred embodiments and with reference to the enclosed drawings.

### BRIEF DESCRIPTION OF THE DRAWINGS

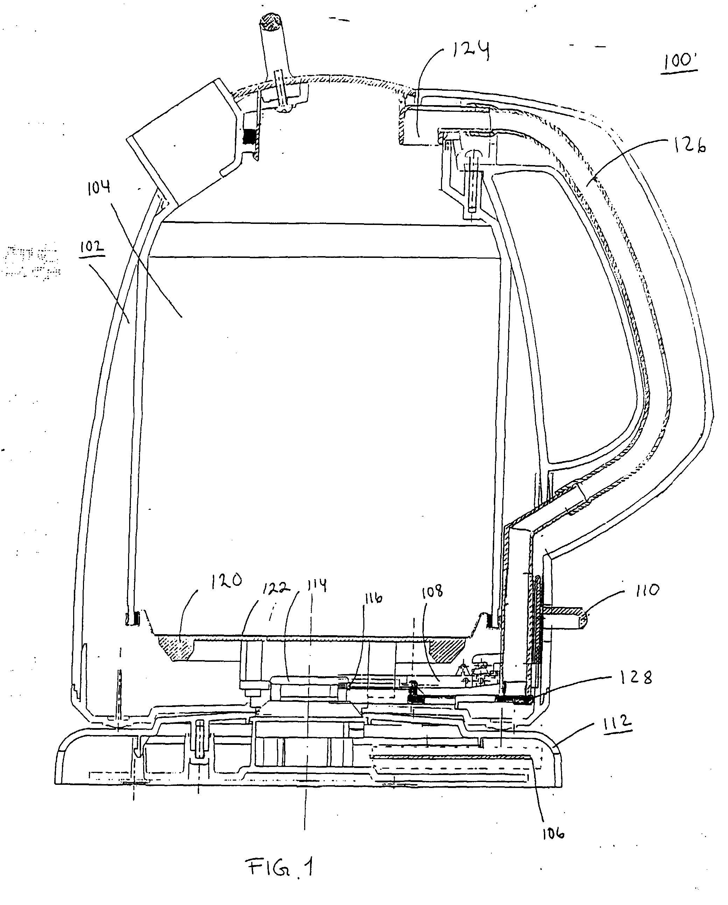

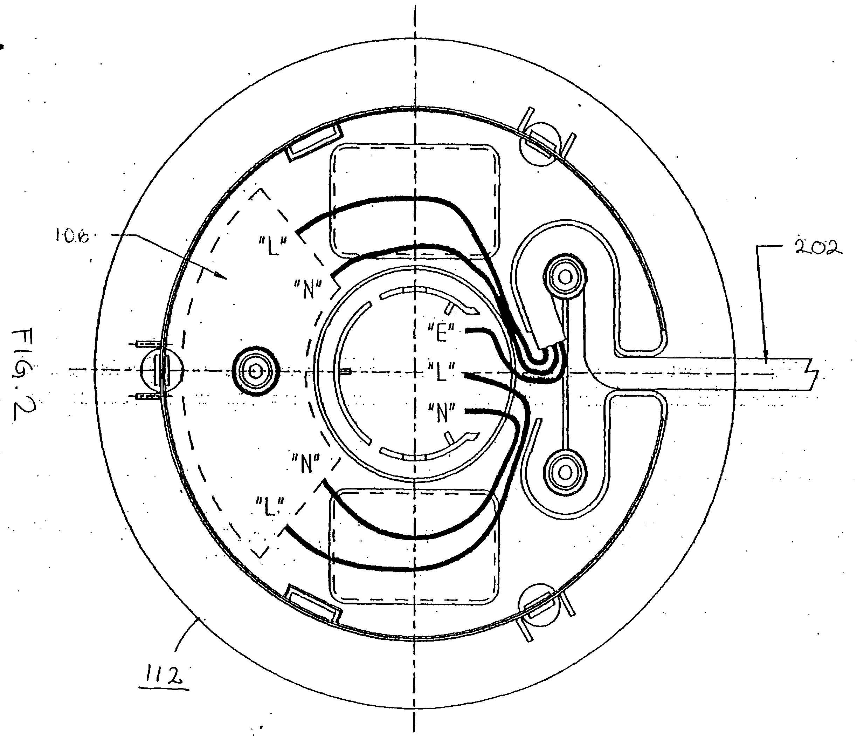

Figure 1 shows a schematic cross-section of a waterkettle system.Figure 2 shows a schematic bottom-section of a base unit to the waterkettle system.

### DETAILED DESCRIPTION OF EMBODIMENTS

A first preferred embodiment, Figure 1, shows a waterkettle system 100 with a waterkettle 102 which at least comprises a container 104, an electrical signal unit 106, an automatic power switch device 108, a base unit 112, a manual power switch device 110. The signal-/sound-unit 106, an electric circuit with an alarm, is in the base unit 112 itself. A power supply system is parts in the waterkettle system 100 that are connected to an external main. Among other things the power supply system can comprise of the automatic power switch device 108, the base unit 112, the manual power switch device 110, and all other parts that current can pass through.

The waterkettle 102 is also comprised of a heater unit 120 with a base plate 122, which is connected to the container 104 which in its turn is connected to an opening 124 to guide the steam which has been built up when a liquid has been heated. The collected steam is lead via a channel 126 to a bimetal 128 that is connected to the automatic power switch device 108.

Figure 2 shows that the signal unit 106 is connected to the base unit 112. The power supply goes through a power cable 202 that in its turn is connected to the signal unit 106. The signal unit 106 can be connected in such way that it can senses if current/voltage is on/off in the waterkettle system 100.

The signal unit 106 is connected in series with current to the heat unit 120 and have such a nature that it liberates its energy to a device that produce signals, for example a piezoelement, when the circuit disconnects. The energy to run the device that produces signals is stored in a capacitor, which is not shown in the Figures.

The waterkettle system 100 functions in the following way: When a switch, not shown in the figures, on the power cable 202 to the waterkettle system 100 is put into power socket the waterkettle system 100 gives a beep-sound, this function is not a requirement for the this invention. The signal unit 106 will give sound when the automatic power switch device 108 senses if power is turned on/off. Thereafter the waterkettle 102 connects to the base unit 112, if such exists. The water is pored into the container 104 that is in contact with the base plate 122, which is connected to the heating unit 120. The water is heated with assistance of the heating unit 120, see Figure 1, which heats the base plate 122 so that the water at the end will be heated. The heating unit 120 gets its power from the base unit 112, whose central hub 114 transfers current via small electrical tin-plates 116 which are in connection with the mains via the power cable 202. Hot steam from the heated water is led into, with assistance of the steam pressure, and through the opening 124; and thereafter through channel 126 to the end reach the bimetal 128, as sit in the automatic power switch device 108. The bimetal 128 will change at a predetermined value, thereby the arm of the automatic power switch device 108 that are joined pivotally round its rotation point. When the electrical tin-plate of the automatic power switch device 108 is disconnected the signal unit 106 will release its energy, thereby the signal unit 106 will give a sound signal, or a other type of signal as being noticed by the user that the heated matter is ready. In connection with the automatic power switch device 108 is turned off, is also the manual power switch device 110 turned off.

If the heated matter is prematurely disconnected, for example when the waterkettle 102 is lifted from its base unit 112 the automatic power switch device 108 will be turned off like the manual power switch device 110 since the base unit 112 have a special switch by the central hub 114 senses that the waterkettle 102 has been removed from the base unit 112. Consequently also in this case, the signal unit 106 will warn the user that the heated matter has been disconnected prematurely.

The signal unit 106 can give a signal in follow cases; when the power to the waterkettle 102 is disconnected, it will say when the water is heated. Alternative when the heated matter manually disconnects through the manual power switch device 110 that will be turned off on the waterkettle 102. Further alternative is when the waterkettle 102 is lifted from the base unit 112, i.e. consequently when the waterkettle 102 can not get the power. The waterkettle system 100 can also give signal if any of the security systems break the circuit, i.e. if the water kettle is dry, or if the user forgets to fill the waterkettle 102.

The signal unit 106 can also be run by a power accumulator unit or a battery whose energy as a hole or partly releases when circuit disconnects.

Another preferred embodiment of the signal unit 106 can be that it can get its energy directly from mains, i.e. that in previously have a charged energy as will be released when the signal unit 106 gives the signal.

The signal unit 106 can according to the previous description can also, if so desired, give notice to the user in another way than with sound, for example with visual signal, a light device, a flashing light. In this way the user can be notified that the water has been heated.

In the waterkettle system 100 there is also a security system which senses bimetal if the base plate 122 becomes to hot, for example if the water boils dry or if the user forgets to fill water. Even other security systems are conceivable which can interrupt the waterkettle 102 when something is wrong. In all these cases the signal unit 106 senses the current/voltage that has been disconnected.

Other preferred embodiment:
Naturally a sound unit 106 is not limited to be placed in its base unit 112 but can even be put anywhere in the waterkettle 102 or in connection to the automatic/manual power switch device 108, 110. In this case the waterkettle 102 obtains its power from power cable 202 directly into in the waterkettle 102 or via a male-female connector. In this case the signal unit can be within the waterkettle 102 or as a separate unit outside the waterkettle 102.

Another embodiment is when the signal unit 106 has been connected to the automatic power switch device 108 that activates the manual power switch device 110.

Another embodiment is when the signal unit 106 can be activated mechanically through a secondary power switch device, or another type of signal can be disconnected by an optical switch. The automatic power switch device 108 can have a moveable pivot arm that is moved in on and off position.

Further possible function that the signal unit 106 can be used for is when the waterkettle 102 connects to the mains so will the signal unit 106 give a signal, a certain amount of times, which are predetermined to confirm that for the waterkettle 102 has been connected to the mains. Naturally there is no need for this function for all waterkettle systems according to invention.

## Claims

1. A device for a waterkettle system (100) which comprises a signal unit (106), and a power supply system, **characterized of**, that the signal unit is connected to the power supply system in the waterkettle system, in such a manner that the signal unit is activated if current/voltage is turned off in the waterkettle system.

2. A device according to patent claim 1, **characterized of**, that the signal unit is activated if current/voltage is turned on in the waterkettle system.

3. A device according to patent claim 1 or 2, where waterkettle system also comprises an automatic power switch device (108), **characterized of**, that the signal unit is connected to the automatic power switch device.

4. A device according to patent claims 1 and/or 2, 3, where the waterkettle system also is comprised of a manual power switch device (110), **characterized of**, that the signal unit is connected to the manual power switch device.

5. A device according to any of the above patent claims, where the waterkettle system also is comprised of a base unit (112), **characterized of**, that the signal unit is connected to the base unit.

6. A device according to patent claim 5, **characterized of**, that the waterkettle is connected to the base unit through a hut (114), which transfer current via a tin-plate (116).

7. A device according to any of above patent claims, **characterized of**, that the signal unit is connected to a power accumulator unit.

8. A method which gives signal when using a waterkettle system (100) with a signal unit (106), and a power supply system, comprised of the following steps: to connect the waterkettle system to the mains, to pour liquid in the system, to let the liquid be heated up, and turn off the waterkettle system, **characterized of**, that the electrical signal unit is connected to the power supply system in the waterkettle system, and that the method further comprises of the following steps: to sense if current/voltage is turned off in the waterkettle system which is done by the signal unit and then to give signal which is done by the signal unit.

9. A method according to patent claim 8, **characterized of**, that the method further comprises of the following steps: to sense if the current/voltage is turned on in the waterkettle system which is done by the signal unit and then to give signal which is done by the signal unit.

10. A method to give signal when using a waterkettle system (100) according to patent claim 8 and/or 9, comprised of the following steps: to connect the waterkettle system to mains, and to turn off the waterkettle system when the liquid have reached the desired temperature, **characterized of**, that the method further comprises of the following step: to give an acoustic or visual signal from the signal unit in the waterkettle system after that the water has been heated up and turned off.
